# EUROPÄISCHE PATENTSCHRIFT

(11) **EP 1 638 720 B1**
(45) Veröffentlichungstag und Bekanntmachung des Hinweises auf die Patenterteilung: **15.08.2007**
(21) Anmeldenummer: 04710834.5
(22) Anmeldetag: 13.02.2004
(51) Int. Cl.: B23B 3/02, B23B 39/16

(54) **WERKZEUGMASCHINE MIT ZUEINANDER VERSTELLBAREN PARALLELEN WERKZEUGSPINDELN**
MACHINE TOOL COMPRISING PARALLEL TOOL SPINDLES THAT CAN BE REPOSITIONED IN RELATION TO ONE ANOTHER
MACHINE-OUTIL A BROCHES PARALLELES POUVANT ETRE RAPPROCHEES

(30) Priorität: 28.06.2003 DE 10329402
(43) Veröffentlichungstag der Anmeldung: 29.03.2006
(73) Patentinhaber: Witzig & Frank GmbH, 77652 Offenburg (DE)
(72) Erfinder: BAUER, Walter, 75397 Simmozheim (DE); REMMEL, Timo, 77871 Renchen-Ulm (DE); NEBELING, Helmut, 77654 Offenburg (DE)
(74) Vertreter: Rüger, Barthelt & Abel Patentanwälte
(86) Internationale Anmeldenummer: PCT/EP2004/001339
(87) Internationale Veröffentlichungsnummer: WO 2005/000507

(56) Entgegenhaltungen:
- EP-A- 0 811 448
- DD-A- 34 868
- DE-A- 19 859 360
- US-A- 3 203 282

## Beschreibung

Die Erfindung bezieht sich auf eine Werkzeugmaschine zur insbesondere synchronen, spanenden Bearbeitung von Werkstücken mit zwei oder mehreren Spindeleinheiten gemäß Oberbegriff des Anspruches 1 (siehe, z.B., EP-0811448-A).

Bei der mehrspindeligen, synchronen Bearbeitung von Werkstücken z.B. mit einem Doppelspindel-Bearbeitungsmodul kann es durch unterschiedliche Effekte, insbesondere auf Grund von Wärmedehnungen, zur Veränderung der Abstände zwischen den Bearbeitungsspindeln kommen. Diese Veränderungen können teilweise erheblich die Genauigkeit der Werkstückbearbeitung beeinträchtigen, sodass die erforderliche Genauigkeit während der Bearbeitung nicht mehr prozesssicher gewährleistet werden kann.

Gegenüber den synchron arbeitenden Maschinen wurden daher Maschinen mit getrennten Antrieben in ein oder mehreren Achsen der Bearbeitungseinheiten ausgeführt. Derartige Maschinen haben z.B. die Konzeption einer getrennten z-Achse oder einer getrennten y- und z-Achse. Damit ist es möglich, die Prozesssicherheit bei den kritischen Bearbeitungsfällen hinsichtlich der Werkzeuglängen zu gewährleisten. Eine Positionskompensation hinsichtlich des Abstandes in der Ebene normal zur Spindelachse ist damit jedoch nicht möglich. Eine weitere Möglichkeit, die Genauigkeit zu verbessern, ist die Bearbeitung mit jeweils nur einem Werkzeug bei genauen Bearbeitungsoperationen. Dadurch wird jedoch die Taktzeit der Bearbeitung jeweils recht deutlich erhöht. Teilweise werden die getrennten Spindeln auch nur für die Reduzierung der Nebenzeiten eingesetzt. Dabei werden in der einen Spindel die Werkzeuge gewechselt, während die andere Spindel eine Bearbeitung ausführt. Dieses Prinzip ist bei kurzen Eingriffszeiten, bei denen die Bearbeitungsoperationen ähnlich lange dauern wie der Werkzeugwechsel, zwar eine Möglichkeit zur Reduzierung der Gesamtzeit, jedoch ist der maschinenseitige Aufwand gegenüber dem Nutzen relativ hoch.

Aus der EP 885 088 B1 ist zwar eine Verstellung einer Arbeitsspindel relativ zu einer anderen fest im Gehäuse angeordneten Spindel bekannt, hierfür ist die Spindel aber in einem eigenen U-förmigen Schlitten mit aufwendigen Verstelleinrichtungen (Getriebe, Kugelrollspindel und Riemenantrieb) angeordnet. Diese Verstellung ist insbesondere zur Anpassung an verschiedene Werkstücke, also für sehr große Verstellwege vorgesehen.

Aus dem Bereich von Drehmaschinen ist ebenfalls eine Verstellung des Abstandes zweier parallel angeordneter Spindeleinheiten über eine aufwendige Kugelrollspindel für große Verstellwege bekannt (JP 62 138 515 U).

Aus der DE 198 59 360 Al ist eine Werkzeugmaschine mit piezoelektrischer Positionskorrektureinrichtung bekannt, wobei zwei Arbeitsspindeln parallel zueinander in einer Bearbeitungseinheit angeordnet sind und zur Verstellung des Abstandes der beiden Spindeln mindestens ein elektrisch angesteuertes piezoelektrisches Stellelement vorgesehen ist. Das Stellelement wirkt dabei auf das Gehäuse der Bearbeitungseinheit und kann die beiden Arme, an denen die Spindeln befestigt sind, geringfügig auseinander biegen. Der Stellweg der Piezoelemente ist in Bezug auf den vorhandenen Bauraum sehr begrenzt. Weiterhin ist auch die Tauglichkeit für den Einsatz dieser Elemente in Produktionsmaschinen kritisch.

Bei der mehrspindligen Bearbeitung ist weiterhin auch der axiale Längenausgleich der Werkzeuge (z-Richtung) zu beachten. Bei der Montage der Werkzeuge können diese in axialer Richtung nur mit einer bestimmten Genauigkeit justiert werden, wobei üblicherweise die Position mit Hilfe eines Werkzeugvoreinstellungsgerätes gemessen wird und die ermittelten Werte mit einer Kompensation in begrenztem Bereich ausgeglichen werden können. Ein Ausgleich unterschiedlicher Längen der Werkzeuge ist hierbei auch nur begrenzt möglich. Bisher lassen sich diese Unterschiede nur durch die Nutzung zweier unabhängiger z-Achsen realisieren.

Aus der EP-A-0811448 ist ein Spindelkopf mit mehreren angetriebenen Arbeitsspindeln bekannt, deren Drehachsen parallel zueinander ausgerichtet sind. Eine der Arbeitsspindeln ist in einer Exzenterhülse gelagert, die verdrehbar ist. Im Ergebnis lässt sich die Drehachse der betreffenden exzentrisch gelagerten Arbeitsspindel verstellen. Dabei änderf die betreffende Arbeitsspindel ihren Abstand zu anderen Arbeitsspindeln. Die Verstellung betrifft sowohl die X-Richtung als auch die Y-Richtung, die beide quer zu der Drehachse der betroffenen Arbeitsspindel festzulegen sind.

Der Erfindung liegt die Aufgabe zu Grunde, für eine gattungsgemäße Werkzeugmaschine eine geeignete Verstelleinrichtung vorzuschlagen, bei der insbesondere die geschilderten Probleme nicht bestehen und insbesondere eine automatische Justage der Position der Spindeleinheiten in x- und/oder y-Richtung ermöglicht wird.

Zur Lösung dieser Aufgabe ist eine Werkzungmaschine nach Anspruch 1 vorgesehen.

In den Unteransprüchen 2 bis 7 sind sinnvolle Ausführungsformen für diese Verstelleinrichtung beschrieben.

Erfindungsgemäß können die beiden achsparallel zueinander, horizontal oder vertikal angeordneten Spindeleinheiten unabhängig voneinander in x- bzw. y-Richtung auf einfache Weise verstellt werden, indem die Exzenterbüchsen, in denen Sie exzentrisch gelagert sind, um einen definierbaren Winkel gedreht werden. Hierfür wird zunächst die Verdrehsicherung bzw. Klemmung der Exzenterbüchsen innerhalb der ortsfesten Konsole gelöst, damit die Exzenterbüchsen gedreht bzw. eine der Exzenterbüchsen in Achsrichtung verschoben werden können bzw. kann. Während der Bearbeitung sind sie dann fest in der Konsole arretiert bzw. geklemmt. Die Klemmung der Spindeleinheiten während der Bearbeitung erfolgt mit einem Klemmring so wie z.B. auch eine Riemenscheibe auf einer Welle befestigt wird. Damit lassen sich auf sehr begrenztem Bauraum hohe Klemmkräfte erzeugen und die Spindel wird auch bei schweren Bearbeitungen sicher in Position gehalten.

Die Verstelleinrichtungen können insbesondere unabhängig voneinander angesteuert und betätigt werden. Zur Verstellung der Exzenterbüchsen in x- und y-Richtung greifen die Verstelleinrichtungen tangential außen an den Exzenterbüchsen an, wobei sie mechanisch, elektrisch oder hydraulisch angetrieben werden können. Zur Umsetzung der linearen Antriebsbewegung in die erforderliche Drehbewegung der Exzenterbüchsen besitzen die Verstelleinrichtungen in Nuten befindliche formschlüssige Übertragungsglieder, wobei an den Exzenterbüchsen achsparallel zur Spindelachse Haltebolzen angeordnet sind, an denen Nutblöcke angreifen, die von Verstellzylindern betätigt werden. Bei der Erfindung werden für die Verstellung selber also konventionelle hydraulische oder mechanische Achsen verwendet. Die Bewegung der Stellelemente wird durch die exzentrischen Büchsen noch einmal untersetzt, wodurch eine sehr feinfühlige Verstellbewegung ausgeführt werden kann.

Die Bewegung der Verstelleinrichtungen, insbesondere der an den Verstellzylindern angeordneten Nutblöcke bzw. der Haltebolzen am äußeren Umfang der Exzenterbüchsen wird durch ein automatisches Messsystem erfasst. Der Verstellweg in x- und y-Richtung liegt im Bereich von mehreren zehntel Millimetern, vorzugsweise von 0,1 bis 0,5 mm und in z-Richtung im Bereich von 0,8 bis 5 mm, wobei die Verstellung mit einer Genauigkeit von < 1 µm regelbar ist. Gegenüber den bisher bekannten, auf piezoelektrischen Aktoren basierenden Stellelementen, ist damit die Korrektur in wesentlich größeren Bereichen möglich.

Die Verstellbewegung in z-Richtung kann insbesondere durch eine linear betätigbare Betätigungsleiste erfolgen, die über einen auf dem Spindelgehäuse angeordneten Ring die Spindeleinheit in axialer Richtung bewegt.

Die Erfindung wird anhand der beigefügten Figuren 1 bis 3 beispielsweise näher erläutert. Es zeigen
- Fig. 1: eine prinzipielle Anordnung von zwei achsparallel nebeneinander angeordneten Spindeleinheiten 2,3 zur Wirkungsweise der in der x-y-Ebene normal zu den Spindelachsen B1 und B2 liegenden Exzenterbüchsen 5, 6,
- Fig. 2: in der Draufsicht die beiden nebeneinander angeordneten Spindeleinheiten 2, 3 mit dem dazwischen liegenden Stellblock 9, an dem die Verstelleinrichtungen Vx, Vy und Vz für die Verstellung in x-, y-und z-Richtung angeordnet sind und
- Fig. 3 und 4: eine perspektivische Darstellung einer Spindeleinheit 2 bzw. 3, des Stellblockes 9 und des zugehörigen Ventilblockes 4.

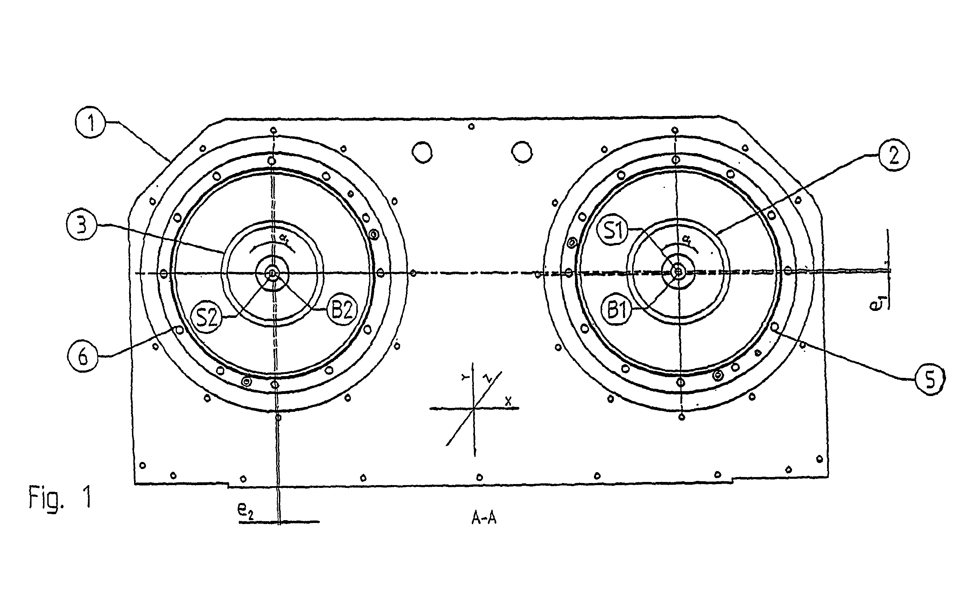

Wie in Fig. 1 schematisch dargestellt ist, sind die beiden parallel nebeneinander angeordneten Spindeleinheiten 2 und 3 jeweils exzentrisch in einer Exzenterbüchse 5, 6 fest angeordnet. Die Exzenterbüchsen 5, 6 sind in der Konsole 1 der Werkzeugmaschine jeweils um die Drehachsen B1 und B2 um die Winkel α1 und α2 drehbar gelagert. Die Drehachse S1 der Spindeleinheit 2 besitzt in der Grundstellung in y-Richtung die Exzentrizität e1 gegenüber der Drehachse B1 der Exzenterbüchse 5, während die Drehachse S2 der Spindeleinheit 3 in x-Richtung die Exzentrizität e2 gegenüber der Drehachse B2 der Exzenterbüchse 6 besitzt. Durch die Verdrehung z.B. der Exzenterbüchse 5 innerhalb der Konsole 1 um die Drehachse B1 um den Winkel α1 um wenige Winkelgrade wird die Spindeleinheit 2 insbesondere in der x-Richtung verstellt. In gleicher Weise wird durch die Drehung der Exzenterbüchse 6 die darin fest angeordnete Spindeleinheit 3 in y-Richtung verstellt. Die Spindeleinheit 2 wird bei der Drehung um die Drehachse B1 zwar auch gleichzeitig in y-Richtung bzw. die Spindeleinheit 3 bei der Drehung um die Drehachse B2 auch gleichzeitig in x-Richtung verstellt, bei den hier vorgesehenen Winkeln von vorzugsweise nur einigen Winkelgeraden ist diese gleichzeitige Verstellung als sogenannter Fehler zweiter Ordnung aber vernachlässigbar klein.

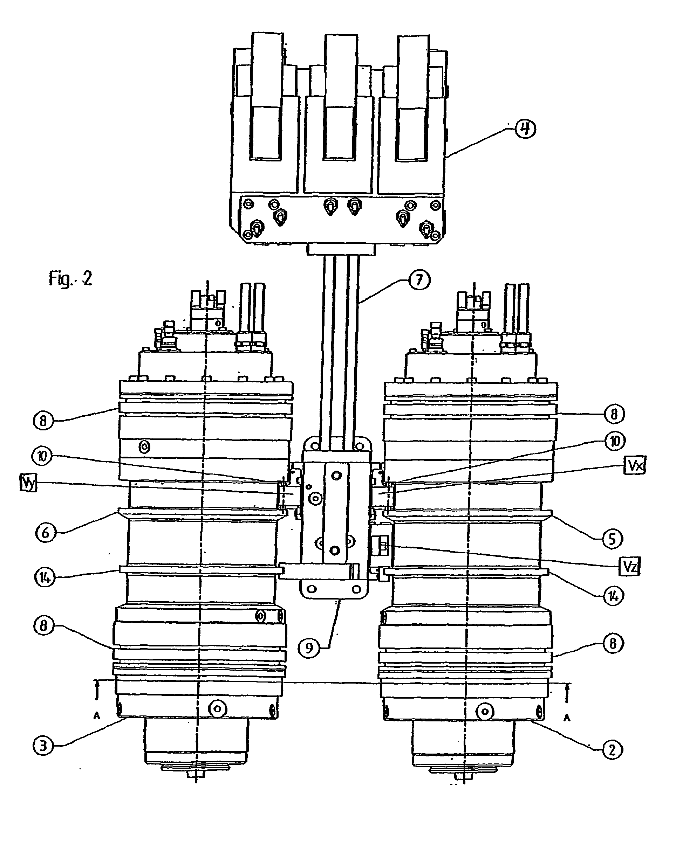

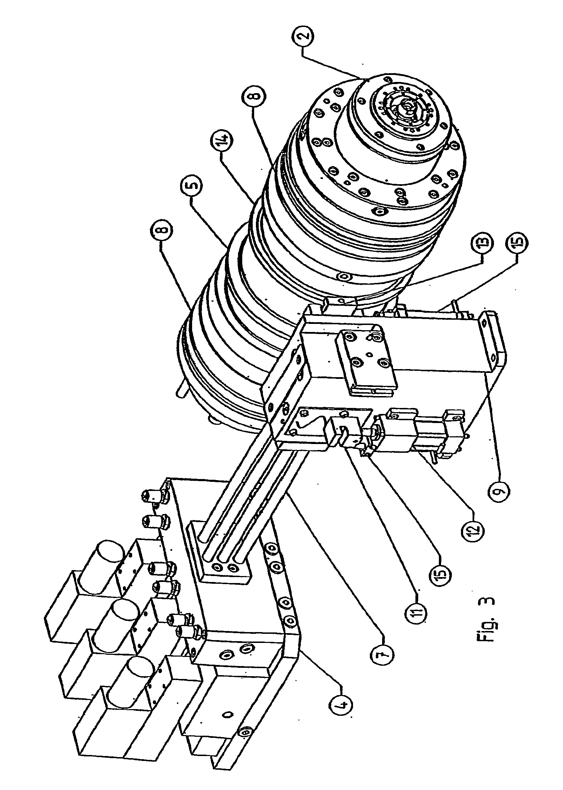

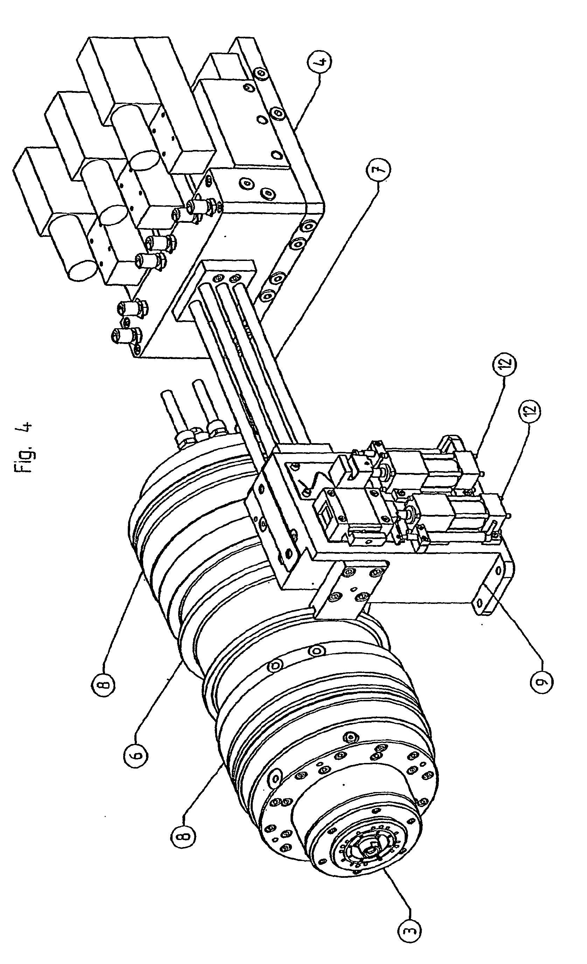

In den Figuren 2 bis 4 sind die Spindeleinheiten 2, 3 mit ihren üblichen Konstruktionsdetails dargestellt, wobei nur die für den Erfindungsgegenstand wichtigen Elemente mit Bezugszeichen versehen sind. Die Exzenterbüchsen 5, 6 mit den darin fest angeordneten Spindeleinheiten 2, 3 werden mit Hilfe von zwei an sich bekannten Klemmringen 8 mit der Konsole 1 gegen Verdrehung und axiale Verschiebung gesichert. Die Klemmung geschieht hydromechanisch. Für die jeweilige Verstellung wird die Klemmung gelöst. Die Verstelleinrichtungen Vx, Vy und Vz sind jeweils auf einem einzigen Verstellblock 9 angeordnet, wobei jeder Verstelleinrichtung ein eigener Verstellzylinder 12 zugeordnet ist, der über entsprechende Hydraulikleitungen 7 mit einem Ventilblock 4 verbunden ist. In Fig. 3 ist beispielhaft nur der Verstellzylinder 12 für die Verstelleinrichtung Vx dargestellt. Am Ende des Kolbens des Verstellzylinders 12 ist dabei ein Nutblock 11 angeordnet, der an einem an der Exzenterbüchse 5 außen angebrachten Haltebolzen 10 angreift. Auf diese Weise wird die lineare Bewegung des Verstellzylinders 12 in die Drehbewegung der Exzenterbüchse 5 umgewandelt. Auf der der Spindeleinheit 3 zugewandten Seite des Stellblockes 5 ist der in den Figuren nicht dargestellte Verstellzylinder der Verstelleinrichtung Vy angeordnet. Außerdem ist auch der entsprechende Verstellzylinder für die Verstelleinrichtung Vz nicht extra dargestellt. Von der Verstelleinrichtung Vz ist lediglich die Betätigungsleiste 13 ersichtlich, die eine Nut für den auf der Spindeleinheit 2 angeordneten Ring 14 besitzt. Die Verstellung erfolgt jeweils spielfrei.

Bei der Konstruktion der Maschine wurden alle Verstelleinrichtungen Vx, Vy und Vz als komplette NC-Achsen mit jeweils einem eigenen Messsystem 15 ausgebildet, um die direkte Messung der Position einer Spindeleinheit 2, 3 mit hoher Positionsauflösung zu ermöglichen. Für die Steuerung der Bewegung der hydraulischen Verstellzylinder 12 werden übliche Reglerbaugruppen verwendet. Dabei ist eine direkte Verknüpfung der Korrekturbewegungen mit jedem einzelnen Werkzeug möglich. Die Verstellung der Korrektureinrichtungen geht nicht in die Nebenzeit der Maschine ein. Diese wird parallel mit anderen Stellbewegungen während des Werkzeugwechsels durchgeführt. Insbesondere bei der Längenkorrektur der Werkzeuge ist eine Hinterlegung der Korrekturwerte im NC-Programm möglich. Dadurch wird mit dem Aufruf des jeweiligen Werkzeuges der entsprechende Längenkorrekturwert berücksichtigt.

Zur Erfassung der Ist-Positionen der beiden Spindeln zueinander können die gefertigten Werkstücke off-line vermessen werden oder die Positionen der Spindeln durch in den Spindeln aufgenommene Messtaster an Referenzpunkten erfasst werden. Durch die Verteilung der Korrektur auf beide Bearbeitungsspindeln ergeben sich äquivalente mechanische Eigenschaften der beiden Spindeln hinsichtlich der Steifigkeit. Weiterhin wird dadurch erreicht, dass die gesamte Einheit in einem minimalen Bauvolumen untergebracht werden kann.

Bei der Konstruktion der Erfindung wurde gegenüber bisher bekannten Prinzipien darauf geachtet, dass die Verstelleinheit für die Justage der Spindeln ohne großen Aufwand auch nachträglich in eine Maschine eingebaut werden kann. Damit sind die Eigenschaften der Maschine nicht von der Integration der Einheit abhängig. Bei bekannten Mechanismen lagen die Stellelemente direkt im Kraftfluss der Maschine und beeinflussten dadurch das Nachgiebigkeitsverhalten der Maschine.

Die verwendeten Bauelemente können in einem gut geschützten Raum untergebracht werden.

### Bezugszeichenliste:

- 1: Konsole
- 2: Spindeleinheit (in 5)
- 3: Spindeleinheit (in 6)
- 4: Ventilblock
- 5: Exzenterbüchse (mit exzentrisch darin gelagerter 2)
- 6: Exzenterbüchse (mit exzentrisch darin gelagerter 3)
- 7: Hydraulikleitungen
- 8: Klemmring (für Klemmung von 5, 6 an 1)
- 9: Stellblock (für die Kompensation in x-, y-, z-Richtung)
- 10: Haltebolzen (an 5 für 11)
- 11: Nutblock (an Vx für 10)
- 12: Verstellzylinder (an Vx)
- 13: Betätigungsleiste (von Vz)
- 14: Ring (an 2 für 13)
- 15: Messsystem (an Vx)

- S1: Drehachse von 2
- S2: Drehachse von 3

- B1: Drehachse von 5
- B2: Drehachse von 6

- Vx: Verstelleinrichtung (für Verstellung in x-Richtung)
- Vy: Verstelleinrichtung (für Verstellung in y-Richtung)
- Vz: Verstelleinrichtung (für axiale Verstellung in z-Richtung)

- α1: Winkel um S1
- α2: Winkel um S2

- e1: Exzentrizität zwischen S1 und B1 in y-Richtung
- e2: Exzentrizität zwischen S2 und B2 in x-Richtung

## Patentansprüche

1. Werkzeugmaschine zur insbesondere synchronen, spanenden Bearbeitung von Werkstücken mit
- zwei oder mehreren, parallel nebeneinander in einer Bearbeitungseinheit angeordneten Spindeleinheiten (2, 3) zur Aufnahme von Werkzeugen und
- Verstelleinrichtungen (Vx, Vy, Vz) zur Feineinstellung der Position der Spindeleinheiten (2, 3) zueinander, vorzugsweise in allen drei Richtungen x, y und z des rechtwinkligen Koordinatensystems innerhalb der Bearbeitungseinheit (4), wobei.
die Verstelleinrichtungen (Vx, Vy) für mindestens eine der Spindeleinheiten (2, 3) zumindest in einer x- und/oder y-Richtung aus einer um eine zentrale Achse (B1, B2) drehbaren und arretierbaren Exzenterbüchse (5, 6) besteht, in der die Spindeleinheiten (2, 3) achsparallel zur zentralen Achse (B1, B2) exzentrisch gelagert sind, **dadurch gekennzeichnet, dass** die Verstelleinrichtungen (Vx, Vy) aus achsparallel zur Spindelachse angeordneten Haltebolzen (10) und daran angreifenden Nutblöcken (11) bestehen, die von Verstellzylindern (12) betätigt werden.

2. Werkzeugmaschine nach Anspruch 1, **dadurch gekennzeichnet, dass** die Verstelleinrichtungen (Vx, Vy, Vz) unabhängig voneinander ansteuerbar sind und die Verstellung in der Bearbeitungsebene (x, y) jeweils durch Drehung der Exzenterbüchsen (5, 6) erfolgt und bei einer der beiden Spindeleinheiten (2, 3) von einer Bewegung in z-Richtung überlagert wird.

3. Werkzeugmaschine nach Anspruch 1 oder 2, **dadurch gekennzeichnet, dass** die Verstelleinrichtungen (Vx, Vy) tangential am äußeren Rand der Exzenterbüchsen (5, 6) angreifen.

4. Werkzeugmaschine nach Anspruch 1, 2 oder 3, **dadurch gekennzeichnet, dass** die Verstelleinrichtungen (Vx, Vy, Vz) mechanisch, elektrisch oder hydraulisch antreibbar sind.

5. Werkzeugmaschine nach einem der vorhergehenden Ansprüche **gekennzeichnet durch** ein Messsystem (15) zur Erfassung des Verstellweges der an den Verstellzylindern (12) angeordneten Nutblöcke (11).

6. Werkzeugmaschine nach einem der vorhergehenden Ansprüche, **dadurch gekennzeichnet, dass** der Verstellweg in x-, y-Richtung im Bereich von 0,1 bis 0,5 mm und in z-Richtung im Bereich von 0,8 bis 5 mm liegt.

7. Werkzeugmaschine nach einem der vorhergehenden Ansprüche, **dadurch gekennzeichnet, dass** die Verstellung mit einer Genauigkeit von < 1 µm regelbar ist.

## Claims

1. Machine tool in particular for the synchronous machining of workpieces with
• two or more spindle units (2, 3) arranged parallel and adjacent to one another in a machining unit to receive tools, and
• adjusting means (Vx, Vy, Vy) for fine adjustment of the position of the spindle units (2, 3) relative to one another, preferably in all three directions x, y and z of the system of rectangular coordinates within the machining unit (4),
wherein
the adjusting means (Vx, Vy) for at least one of the spindle units (2, 3) at least in an x and/or y direction comprise an eccentric bush (5, 6), which is lockable and rotatable around a central axis (B1, B2), and in which the spindle units (2, 3) are eccentrically disposed to be axis-parallel to the central axis (B1, B2),
**characterised in that**
the adjusting means (Vx, Vy) comprise retaining bolts (10) arranged axis-parallel to the spindle axis and grooved blocks (11), which act thereon and are operated by adjusting cylinders (12).

2. Machine tool according to Claim 1, **characterised in that** the adjusting means (Vx, Vy, Vz) can be actuated independently of one another and the adjustment in the machining plane (x, y) respectively occurs by rotation of the eccentric bushes (5, 6) and is superposed by a movement in the z-direction in the case of one of the two spindle units (2, 3).

3. Machine tool according to Claim 1 or 2, **characterised in that** the adjusting means (Vx Vy) act tangentially on the outer edge of the eccentric bushes (5, 6).

4. Machine tool according to Claim 1, 2 or 3, **characterised in that** the adjusting means (Vx, Vy, Vz) can be driven mechanically, electrically or hydraulically.

5. Machine tool according to one of the preceding claims, **characterised by** a measurement system (15) for detection of the setting range of the grooved blocks (11) arranged on the adjusting cylinders (12).

6. Machine tool according to one of the preceding claims, **characterised in that** the setting range in the x-, y-direction lies in the range of 0.1 to 0.5 mm and in the z-direction in the range of 0.8 to 5 mm.

7. Machine tool according to one of the preceding claims, **characterised in that** the adjustment can be controlled with an accuracy of < 1 µm.

## Revendications

1. Machine-outil, notamment pour l'usinage synchrone de pièces, par enlèvement de copeaux, dans laquelle :
- deux unités à broche (2, 3) ou davantage, montées parallèlement côte à côte dans une unité d'usinage, servent à accueillir des pièces,
- des dispositifs de déplacement (Vx, Vy, Vz) sont prévus pour le réglage fin de la position des unités à broche (2, 3) de préférence dans les trois directions (x, y, z) du système de coordonnées rectangulaires à l'intérieur de l'unité d'usinage (2),
- des dispositifs de déplacement (Vx, Vy) pour au moins une des unités à broche (2, 3) dans au moins une direction (x ou y) sont constitués chacun d'une douille à excentrique (5, 6) qui peut tourner autour d'un axe central (B1, B2) et être arrêtée, et dans laquelle est montée excentriquement avec son axe parallèle à l'axe central (B1, B2) l'unité à broche (2, 3) correspondante,
**caractérisée en ce que** les dispositifs de déplacement (Vx, Vy) composés chacun d'une tige de maintien (10) montée parallèlement à l'axe de broche et d'un bloc à rainure (11) engagé sur cette tige, ces deux éléments étant actionnés par des vérins de déplacement (12).

2. Machine-outil selon la revendication 1, **caractérisée en ce que** les dispositifs de déplacement (Vx, Vy, Vz) peuvent être commandés indépendamment les uns des autres, les déplacements dans le plan d'usinage (x, y) ayant lieu chaque fois par rotation de la douille à excentrique (5, 6) correspondante, avec superposition d'un déplacement en direction (z) dans une des deux unités à broche (2, 3).

3. Machine-outil selon la revendication 1 ou 2, **caractérisée en ce que** les dispositifs de déplacement (Vx, Vy) agissent tangentiellement sur le bord externe des douilles à excentrique (5, 6).

4. Machine-outil selon la revendication 1, 2 ou 3, **caractérisée en ce que** les dispositifs de déplacement (Vx, Vy, Vz) peuvent être entraînés mécaniquement, électriquement ou hydrauliquement.

5. Machine-outil selon une des revendications précédentes, **caractérisée en ce qu'**elle est équipée d'un système de mesure (15) pour saisir la course de déplacement des blocs à rainure (11) montés sur les vérins de déplacement (12).

6. Machine-outil selon une des revendications précédentes, **caractérisée en ce que** la course de déplacement, dans les directions x, y est dans une plage de 0,1 à 0,5 mm, tandis que dans la direction z elle est dans la plage de 0,8 à 5 mm.

7. Machine-outil selon une des revendications précédentes, **caractérisée en ce que** le déplacement peut être réglé avec une précision inférieure au micron.
